# FASCICULE DE BREVET EUROPEEN

(11) **EP 3 521 851 B1**
(45) Date de publication et mention de la délivrance du brevet: **29.09.2021**
(21) Numéro de dépôt: 19155110.0
(22) Date de dépôt: 01.02.2019
(51) Int. Cl.: G01S 7/03, G01S 7/02, H01Q 21/24, H01Q 9/04

(54) **DISPOSITIF ET PROCÉDÉ D'ÉMISSION/RÉCEPTION DE SIGNAUX RADIOÉLECTRIQUES**
VORRICHTUNG UND VERFAHREN ZUM SENDEN/EMPFANGEN VON FUNKSIGNALEN
DEVICE AND METHOD FOR TRANSMITTING/RECEIVING RADIO SIGNALS

(30) Priorité: 06.02.2018 FR 1800117
(43) Date de publication de la demande: 07.08.2019
(73) Titulaire: THALES, 92400 Courbevoie (FR)
(72) Inventeur: CORNIC, Pascal, 29238 Brest Cedex 3 (FR); GARREC, Patrick, 33700 Merignac (FR); POREZ, Nicolas, 33700 Merignac (FR)
(74) Mandataire: Lavoix

(56) Documents cités:
- WO-A1-2017/021307
- US-A- 3 540 045
- PAN JIAN ET AL: "Polarization changing technique in macrocosm and it's application to radar", CHINESE JOURNAL OF SYSTEMS ENGINEERING AND ELECTRONICS, SECOND ACADEMY MINISTRY OF AERO-SPACE INDUSTRY, BEIJING, CN, vol. 15, no. 4, 1 décembre 2004 (2004-12-01), pages 447-452, XP011376758, ISSN: 1004-4132, DOI: 10.1109/JSEE.2004.6071509
- WENQUAN CHE ET AL: "Research on single-channel variable polarization system with short switching time", MICROWAVE CONFERENCE, 2000 ASIA-PACIFIC, IEEE, PISCATAWAY, NJ, USA, 3 décembre 2000 (2000-12-03), pages 1535-1538, XP010545198, DOI: 10.1109/APMC.2000.926132 ISBN: 978-0-7803-6435-6

## Description

La présente invention concerne un dispositif d'émission/réception de signaux radioélectriques et un procédé d'émission/réception de signaux radioélectriques associés.

Elle se situe dans le domaine des dispositifs d'émission/réception fonctionnant dans le domaine hyperfréquence et utilisés notamment dans des radars civils ou militaires, au sol ou embarqués.

De manière connue, de tels radars intègrent des dispositifs d'émission/réception. Chaque dispositif d'émission/réception comporte au moins un module de commande d'émission/réception et au moins un élément rayonnant de signaux radioélectriques, le module de commande étant adapté à commander l'émission/réception de signaux radioélectriques de polarisation linéaire et/ou circulaire.

Il est également connu d'utiliser des dispositifs de détection de signaux radioélectriques émis par radar qui ont pour objectif d'identifier le radar émetteur. Typiquement, de tels dispositifs de détection interceptent les signaux émis et effectuent des mesures, puis des calculs permettant d'obtenir des paramètres caractéristiques des signaux interceptés, incluant par exemple la fréquence d'émission, la longueur d'impulsion, la fréquence de répétition, la période de rotation d'antenne. Ces paramètres forment une signature électromagnétique d'un radar. A partir de ces paramètres il est possible de déterminer le type de radar en présence, voire d'identifier ce radar en utilisant des bases de données spécialisées.

Un dispositif de détection comprend typiquement une antenne fonctionnant en réception, adaptée à capter des signaux radioélectriques. En général, pour des raisons de complexité et de coût, les dispositifs de détection sont munis d'antennes à large bande, de manière à maximiser leur capacité de réception. Par exemple, il est fréquent d'utiliser des antennes à large bande de type spirale, adaptées à la polarisation circulaire gauche ou droite, ou bien des antennes large bande de type papillon, adaptées à la réception des polarisations linéaires verticales, horizontales ou inclinées à 45°.

Le document US 3 540 045A décrit des systèmes de polarisation d'ondes électromagnétiques.

Dans diverses applications il serait utile de masquer l'identité du radar émetteur, sans toutefois dégrader sensiblement la performance opérationnelle de ce radar.

L'invention a pour but d'apporter une solution à ce problème, dans le cas des dispositifs d'émission/réception du type adapté à commander l'émission de signaux radioélectriques de polarisation linéaire et/ou circulaire selon une pluralité d'orientations de polarisation, également appelés dispositifs émetteurs/récepteurs à agilité de polarisation en émission et en réception.

A cet effet, l'invention concerne, selon un premier aspect, un dispositif d'émission/réception de signaux radioélectriques selon la revendication 1.

Avantageusement, le dispositif de l'invention fonctionne de manière à leurrer tout dispositif de détection de radar grâce à la modification progressive de l'orientation de polarisation des signaux radioélectriques émis.

Avantageusement, le dispositif d'émission/réception selon l'invention peut présenter une ou plusieurs des caractéristiques conformément aux revendications 2 à 6, prises indépendamment ou en combinaison, selon toutes combinaisons techniquement acceptables.

Selon un autre aspect, l'invention concerne un procédé d'émission/réception de signaux radioélectriques mis en œuvre par un dispositif d'émission/réception de signaux radioélectriques, selon la revendication 7.

Le procédé d'émission/réception de signaux radioélectriques selon l'invention présente des avantages analogues à ceux du dispositif d'émission/réception de signaux radioélectriques brièvement décrit ci-dessus.

Avantageusement, le procédé d'émission/réception selon l'invention peut présenter une ou plusieurs des caractéristiques selon les revendications 8 à 10, prises indépendamment ou en combinaison, selon toutes combinaisons techniquement acceptables.

D'autres caractéristiques et avantages de l'invention ressortiront de la description qui en est donnée ci-dessous, à titre indicatif et nullement limitatif, en référence aux figures annexées, parmi lesquelles :
- la figure 1 illustre schématiquement un dispositif d'émission/réception de signaux radioélectriques selon l'invention et un dispositif de détection de signaux radioélectriques;
- la figure 2 est un synoptique des principaux blocs d'un dispositif d'émission/réception de signaux radioélectrique à agilité de polarisation ;
- la figure 3 représente un vecteur de polarisation d'un champ électrique rayonné correspondant à une émission de signal radiofréquence ;
- la figure 4 illustre schématiquement une antenne réseau à agilité de polarisation ;
- la figure 5 illustre la polarisation des signaux radioélectriques émis et l'amplitude du signal détecté selon un mode de réalisation de l'invention.

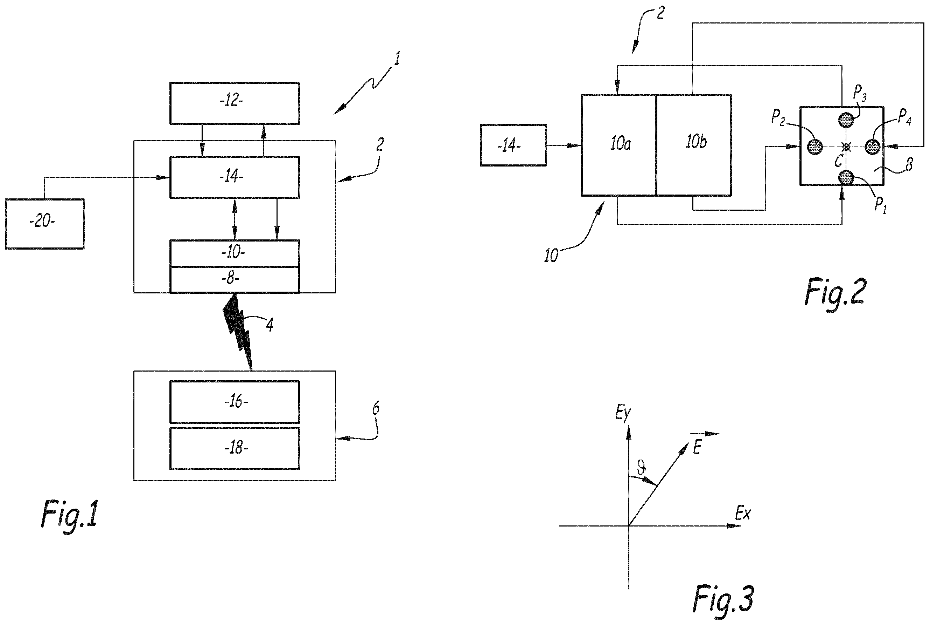

La figure 1 illustre schématiquement un radar 1 comprenant un dispositif d'émission/réception 2 de signaux radioélectriques 4 qui sont captés par un dispositif de détection 6.

Le dispositif d'émission/réception 2 comporte, dans l'exemple de la figure 1, un élément rayonnant 8, ou antenne élémentaire, et un module d'émission/réception 10 (ou T/R module pour « *transmission*/*reception module* » en anglais). En émission, le module d'émission/réception 10 amplifie un signal d'excitation radiofréquence, de préférence hyperfréquence entre 3 et 30 GHz, reçu d'un module externe 12 comportant une électronique de génération de signal et adapté à réaliser la fonctionnalité radar, et applique le signal amplifié à l'antenne 8. Ce signal est émis sous forme de signal radioélectrique (ou ondes radioélectriques). En réception, un signal radioélectrique reçu est amplifié par le module d'émission/réception 10 puis transmis au module 12.

Le module d'émission/réception est commandé par un module de commande 14.

Le dispositif de détection 6 comporte un dispositif de réception 16 et un module 18 de mesure et d'analyse de signaux reçus. Le dispositif de réception 16 comporte notamment une antenne large bande, adaptée pour certaines polarisations de signal radioélectrique reçu dans une bande de fréquence donnée.

Le module 18 d'un tel dispositif de détection est adapté à mesurer ou calculer des paramètres caractéristiques du signal pour ensuite déterminer le type de dispositif d'émission/réception, par exemple le type de radar 1 utilisant le dispositif d'émission/réception 2.

Comme indiqué en introduction, un objectif de l'invention est de mettre en défaut une telle identification du type de dispositif d'émission/réception 2 par un dispositif de détection 6.

Le dispositif d'émission/réception 2 est un dispositif à agilité de polarisation, qui est adapté à émettre et recevoir des signaux radioélectriques de types de polarisation différents parmi les types de polarisation linéaire ou circulaire, et d'orientations de polarisation différentes.

Le type de polarisation et l'orientation de polarisation sont commandés par le module de commande 14, qui est connecté au module d'émission/réception 10.

Par exemple, le dispositif d'émission/réception 2 est du type décrit dans la demande de brevet WO2017/021307 A1.

Ce type de dispositif d'émission/réception comporte, dans un mode de réalisation schématiquement illustré à la figure 2, au moins un élément rayonnant 8 comportant quatre points d'excitation P₁, P₂, P₃ et P₄, regroupés en deux paires de points d'excitation : (P₁, P₃) et (P₂, P₄). Les deux points d'excitation d'une même paire sont disposés symétriquement par rapport à un point central C de l'élément rayonnant. Le dispositif comporte deux modules d'émission/réception 10a, 10b adaptés à exciter chacun une paire de points d'excitation, par un signal radiofréquence, comme illustré schématiquement dans la figure 2, où le module 10a est adapté à exciter la paire (P₁, P₃) et le module 10b est adapté à exciter la paire (P₂, P₄).

Le module de commande 14 est adapté à contrôler, en coopération avec le module d'émission/réception 10, l'amplitude, la phase et la polarisation des signaux radioélectriques émis et reçus.

La figure 3 illustre un angle d'inclinaison θ dans le cas d'une polarisation linéaire, le vecteur E̅ étant représentatif du champ électrique rayonné par l'élément 8, selon une convention de notation.

Par exemple, avec un dispositif d'émission/réception 2 du type représenté à la figure 2, diverses polarisations sont obtenues comme suit :
- alimentation par entrée P₁ et sortie P₃ : polarisation linéaire verticale (θ=0°) ;
- alimentation par entrée P₂ et sortie P₄ : polarisation linéaire horizontale (θ=90°);
- alimentation en phase de même amplitude par entrée P₁ et sortie P₃ et par entrée P₂ et sortie P₄ : polarisation linéaire d'angle d'inclinaison à 45° droite (θ=+45°) ;
- alimentation en opposition de phase de même amplitude par entrée P₁ et sortie P₃ et par entrée P₂ et sortie P₄ : polarisation linéaire d'angle d'inclinaison à 45° gauche (θ=-45°) ;
- alimentation déphasée de 90° et de même amplitude par entrée P₁ et sortie P₃ et par entrée P₂ et sortie P₄ : polarisation circulaire gauche ;
- alimentation déphasée de -90° et de même amplitude par entrée P₁ et sortie P₃ et par entrée P₂ et sortie P₄ : polarisation circulaire droite.

Le déphasage est commandé par un signal Se transmis par le module de commande 14 au module d'émission/réception.

D'autres possibilités de polarisation, et notamment pour faire varier l'angle d'inclinaison θ dans une polarisation linéaire, sont possibles en modifiant l'amplitude et la phase relative des signaux d'excitation radiofréquence sur les paires de points d'excitation.

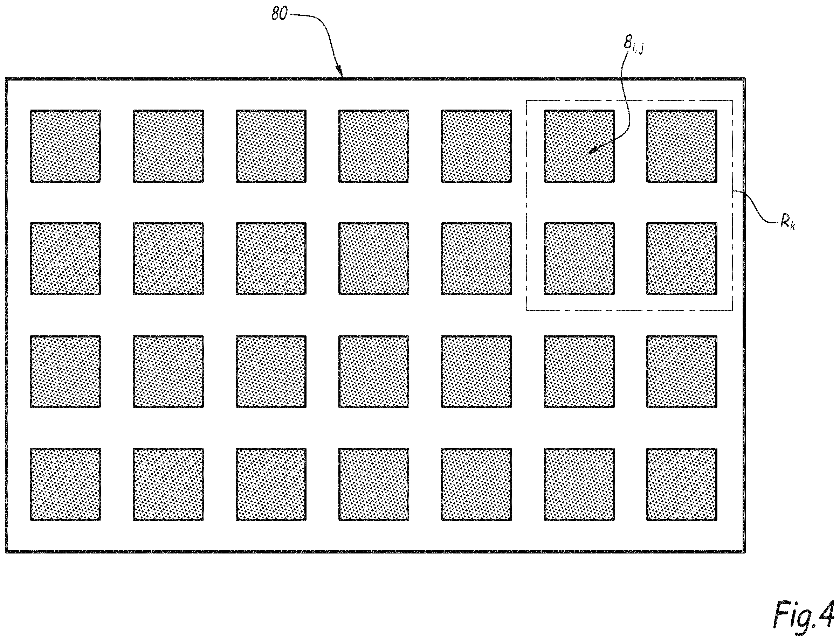

Selon une variante de mise en œuvre, on utilise une antenne réseau 80 telle que représentée schématiquement à la figure 4, comprenant un grand nombre d'éléments rayonnants 8_{i,j}, disposés par exemple selon une répartition matricielle et commandés indépendamment via des modules d'émission/réception (non représentés à la figure 4) analogues à ceux décrits ci-dessus.

Une telle architecture permet un contrôle fin de la polarisation des signaux radioélectriques rayonnés, en utilisant simultanément des polarisations différentes sur les différents éléments rayonnants 8i,j d'antenne ou sur des regroupements Rₖ d'éléments rayonnants d'antenne. En effet, la polarisation finale est la résultante de la sommation des polarisations obtenues par les éléments rayonnants pour une telle antenne.

De préférence, afin de limiter les effets de couplage entre éléments rayonnants 8i,j adjacents, les polarisations sont alternées. Dans ce cas, des taux de polarisation croisée largement inférieurs à 20dB sous la polarisation directe sont obtenus.

Selon l'invention, le module de commande 14 est adapté à commander une modification progressive, dans le temps, de l'orientation de polarisation du signal radioélectrique émis ou reçu.

Par exemple, une interface de commande 20 est utilisée, cette interface de commande étant opérable par un opérateur. L'interface de commande peut être intégrée au dispositif d'émission/réception 2, ou intégrée au module fonctionnel 12 du radar 1, ou externe.

Avantageusement, pour un radar utilisant un dispositif d'émission/réception 2 selon l'invention, le fonctionnement opérationnel est peu impacté, car le radar utilise les réflexions des signaux radioélectriques émis sur des obstacles ou cibles rencontrés.

Le réglage du dispositif d'émission/réception pour émettre et recevoir des signaux radioélectriques de même polarisation donnée dans un intervalle temporel donné permet donc un fonctionnement opérationnel nominal ou quasi-nominal.

Avantageusement, la modification progressive, lente ou rapide, de l'orientation de polarisation, permet de leurrer un dispositif de détection 6, qui est désadapté en réception pour une partie des orientations de polarisation.

Dans un premier mode de réalisation de l'invention, le dispositif d'émission/réception 2, mis en œuvre dans un radar 1, effectue une émission par impulsions de signal radioélectrique (connu sous le nom de « pulse radar » en anglais).

Le signal radioélectrique émis est un signal à polarisation linéaire d'orientation définie par un angle d'inclinaison θ, comme expliqué ci-dessus en référence à la figure 3.

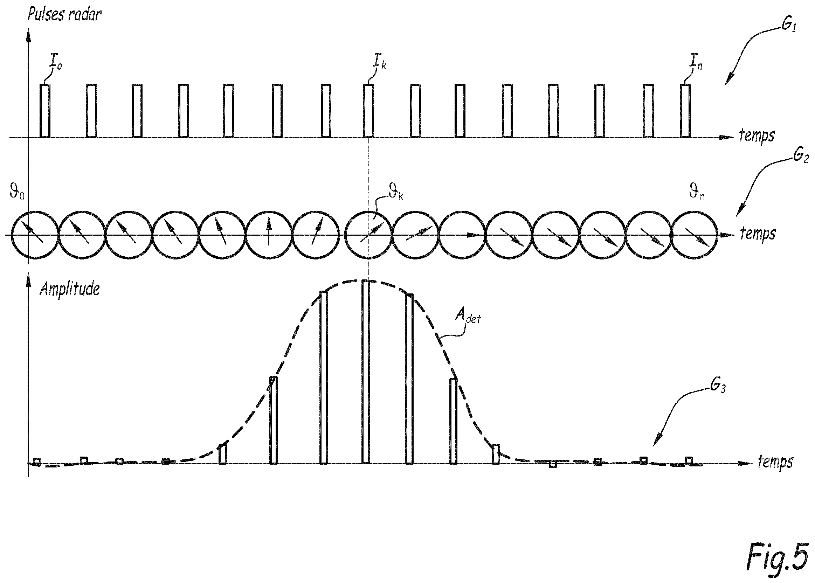

Une émission par impulsions est illustrée schématiquement à la figure 5 dans le graphe G₁ qui représente des impulsions Iₖ en fonction du temps.

En dessous de chaque impulsion Iₖ est représenté, dans le graphe G₂, l'angle θₖ d'inclinaison représentation de l'orientation de polarisation du signal radioélectrique correspondant, sous la forme d'un vecteur directionnel. Dans l'exemple illustré l'angle d'inclinaison varie entre θ₀=-45° (polarisation de 45° gauche) à θₙ=135° en passant par θₖ=45° (polarisation de 45° droite).

Le graphe G₃ illustre schématiquement l'amplitude de signal capté par le récepteur d'un dispositif de détection en fonction du temps. L'enveloppe A_{det} des amplitudes observées a une forme typiquement Gaussienne qui culmine à la réception du signal radioélectrique de polarisation linéaire d'angle d'inclinaison de θ=45° (polarisation de 45° droite). Il s'agit du point d'adéquation maximale avec le type de récepteur dans cet exemple. L'amplitude de signal reçu/capté par le dispositif de détection diminue progressivement de part et d'autre du point culminant.

La modification progressive de l'orientation de polarisation permet dans l'exemple illustré de simuler un lobe d'antenne, de forme typiquement Gaussienne.

Ainsi, la modification progressive de l'orientation de polarisation a pour conséquence la simulation d'une modulation d'amplitude au niveau du dispositif de détection qui est donc leurré en ce qui concerne le type de radar. Par exemple, il est possible de simuler un radar en mode de balayage continu ou alterné à partir d'un radar pointé vers une cible émettant des signaux radioélectriques à polarisation qui évolue dans le temps.

Selon un mode de réalisation, la modification d'orientation est effectuée à partir d'une orientation angulaire initiale, de manière progressive, soit à chaque impulsion soit par paquets d'impulsions, selon un motif de modification de polarisation prédéterminé jusqu'au retour à ladite orientation angulaire initiale sur une durée temporelle prédéterminée T₀.

Ensuite, la modification est répétée avec le même motif de modification de polarisation durant la même durée T₀. Avantageusement, une telle modification permet de simuler une période de balayage.

Par exemple, le motif de modification de polarisation consiste à ajouter un incrément angulaire de valeur δθ prédéterminée à chaque impulsion, comme illustré à la figure 5. De préférence, la valeur δθ est comprise entre 10 et 30 degrés.

De préférence, la dure prédéterminée T₀ est choisie en fonction du type de radar qu'on cherche à simuler.

Le motif de modification de polarisation, par exemple défini par la valeur d'incrément angulaire de valeur δθ et la durée T₀, est transmis par l'interface de commande 20, et la modification de polarisation est mise en œuvre en adaptant les signaux de commande envoyés par le module de commande 14 au(x) module(s) d'émission/réception 10.

Dans un deuxième mode de réalisation, le motif de modification de polarisation consiste à ajouter un incrément angulaire de valeur δθ prédéterminée par paquets d'impulsions, ce qui induit une progression plus lente.

Selon un troisième mode de réalisation, le dispositif d'émission/réception fonctionne en polarisation circulaire, et la modification progressive de l'orientation de polarisation consiste à passer progressivement d'une polarisation circulaire droite à une polarisation circulaire gauche ou vice-versa.

Comme expliqué ci-dessus, lorsque le ou les éléments rayonnants sont excités par des modules d'émission/réception tels que décrits ci-dessus, la variation est obtenue en faisant varier le déphasage par le signal de commande Se entre signaux d'excitation de même amplitude fournis sur les deux paires de points d'excitation.

## Revendications

1. Dispositif d'émission/réception de signaux radioélectriques comportant au moins un module de commande d'émission/réception (14) et au moins un élément rayonnant (8) de signaux radioélectriques, le module de commande (14) du dispositif d'émission/réception étant adapté à commander l'émission/réception par impulsions de signaux radioélectriques de polarisation linéaire et/ou circulaire selon une pluralité d'orientations (θ) de polarisation,
**caractérisé en ce que** le dispositif est adapté à commander une modification progressive de l'orientation de polarisation des signaux radioélectriques en émission et en réception, la modification progressive de l'orientation de polarisation comprenant, à partir d'une orientation de polarisation initiale, une modification progressive d'orientation de polarisation selon un motif de modification d'orientation prédéterminé jusqu'au retour à ladite orientation de polarisation initiale sur une durée temporelle prédéterminée.

2. Dispositif selon la revendication 1 dans lequel le module de commande (14) est adapté à répéter itérativement ladite modification progressive d'orientation de polarisation selon ledit motif de modification d'orientation prédéterminé.

3. Dispositif selon l'une quelconque des revendications 1 ou 2, dans lequel le module de commande (14) est adapté à commander une émission/réception par impulsions de signal radioélectrique en polarisation linéaire, et dans lequel la commande de modification progressive de l'orientation consiste à commander une modification d'orientation de polarisation par un incrément angulaire de valeur prédéterminée à chaque impulsion.

4. Dispositif selon l'une quelconque des revendications 1 ou 2, dans lequel le module de commande (14) est adapté à commander une émission/réception par impulsions de signal radioélectrique en polarisation linéaire, et dans lequel la commande de modification progressive de l'orientation consiste à commander une modification d'orientation de polarisation par un incrément angulaire de valeur prédéterminée par paquets d'impulsions.

5. Dispositif selon l'une quelconque des revendications 1 ou 2, dans lequel le module de commande (14) est adapté à commander une émission/réception par impulsions de signal radioélectrique en polarisation circulaire, et dans lequel la commande de modification progressive de l'orientation consiste à commander une modification d'orientation de polarisation par un incrément angulaire de valeur prédéterminée à chaque impulsion ou par paquets d'impulsions, pour passer progressivement d'une polarisation circulaire droite à une polarisation circulaire gauche ou d'une polarisation circulaire gauche à une polarisation circulaire droite.

6. Dispositif selon l'une quelconque des revendications 1 à 5, comprenant au moins un moyen d'émission/réception de signaux radioélectrique comportant un élément rayonnant (8) de signaux radioélectriques et deux paires de points d'excitation (P₁, P₃ ; P₂, P₄), les points d'excitation d'une paire étant disposés symétriquement par rapport à un point central (C) dudit élément rayonnant (8), et deux modules d'émission/réception (10a, 10b) adaptés à exciter chacun une desdites paires de points d'excitation.

7. Procédé d'émission/réception de signaux radioélectriques mis en œuvre par un dispositif d'émission/réception (2) de signaux radioélectriques comportant au moins un module de commande d'émission/réception (14) et au moins un élément rayonnant de signaux radioélectriques (8), le module de commande (14) du dispositif d'émission/réception étant adapté à commander l'émission/réception par impulsions de signaux radioélectriques de polarisation linéaire et/ou circulaire selon une pluralité d'orientations de polarisation (θ), **caractérisé en ce qu'**il comporte une commande de modification progressive de l'orientation de polarisation des signaux radioélectriques émis/reçus, la commande de modification progressive de l'orientation de polarisation comprenant, à partir d'une orientation angulaire initiale, une modification progressive d'orientation angulaire selon un motif de modification prédéterminé jusqu'au retour à ladite orientation angulaire initiale sur une durée temporelle prédéterminée.

8. Procédé selon la revendication 7, dans lequel ladite modification progressive d'orientation angulaire selon un motif de modification prédéterminé est répétée itérativement.

9. Procédé selon l'une des revendications 7 ou 8, dans lequel ledit module de commande est adapté à commander une émission/réception par impulsions de signal radioélectrique en polarisation linéaire, et dans lequel la commande de modification progressive de l'orientation consiste à commander une modification d'orientation de polarisation par un incrément angulaire de valeur prédéterminée à chaque impulsion ou par paquets d'impulsions.

10. Procédé selon l'une des revendications 7 ou 8, dans lequel ledit module de commande est adapté à commander une émission/réception par impulsions de signal radioélectrique en polarisation circulaire, et dans lequel la commande de modification progressive de l'orientation consiste à commander une modification d'orientation de polarisation par un incrément angulaire de valeur prédéterminée à chaque impulsion ou par paquets d'impulsions, pour passer progressivement d'une polarisation circulaire droite à une polarisation circulaire gauche ou d'une polarisation circulaire gauche à une polarisation circulaire droite.

## Patentansprüche

1. Funksignal-Sende-/Empfangsvorrichtung, die mindestens ein Sende-/ Empfangs-Steuermodul (14) und mindestens ein Funksignal-Abstrahlelement (8) umfasst, wobei das Steuermodul (14) der Sende-/Empfangsvorrichtung angepasst ist, das Senden/Empfangen durch Impulse von linear und/oder zirkular polarisierten Funksignalen in einer Mehrzahl von Polarisationsrichtungen (θ) zu steuern,
**dadurch gekennzeichnet, dass** die Vorrichtung angepasst ist, eine fortschreitende Änderung der Polarisationsrichtung der sendenden und empfangenden Funksignale zu steuern, wobei die fortschreitende Änderung der Polarisationsrichtung, ausgehend von einer Ausgangspolarisationsrichtung, eine fortschreitende Änderung der Polarisationsrichtung gemäß einem vorbestimmten Richtungsänderungsmuster bis zur Rückkehr zu der Ausgangspolarisationsrichtung über eine vorbestimmte Zeitdauer umfasst.

2. Vorrichtung nach Anspruch 1, bei der das Steuermodul (14) angepasst ist, die fortschreitende Änderung der Polarisationsrichtung gemäß dem vorbestimmten Richtungsänderungsmuster iterativ zu wiederholen.

3. Vorrichtung nach einem beliebigen der Ansprüche 1 oder 2, bei der das Steuermodul (14) angepasst ist, ein Senden/Empfangen durch Impulse eines linear polarisierten Funksignals zu steuern, und bei der das Steuern der fortschreitenden Änderung der Richtung darin besteht, eine Änderung der Polarisationsrichtung um ein Winkelinkrement eines vorbestimmten Wertes bei jedem Impuls zu steuern.

4. Vorrichtung nach einem beliebigen der Ansprüche 1 oder 2, bei der das Steuermodul (14) angepasst ist, ein Senden/Empfangen durch Impulse eines linear polarisierten Funksignals zu steuern, und bei der das Steuern der fortschreitenden Änderung der Richtung darin besteht, eine Änderung der Polarisationsrichtung um ein Winkelinkrement eines vorbestimmten Wertes durch Pakete von Impulsen zu steuern.

5. Vorrichtung nach einem beliebigen der Ansprüche 1 oder 2, bei der das Steuermodul (14) angepasst ist, ein Senden/Empfangen durch Impulse eines zirkular polarisierten Funksignals zu steuern, und bei der das Steuern der fortschreitenden Änderung der Richtung darin besteht, eine Änderung der Polarisationsrichtung um ein Winkelinkrement eines vorbestimmten Wertes bei jedem Impuls oder durch Pakete von Impulsen zu steuern, um fortschreitend von einer rechtsdrehenden zirkularen Polarisation zu einer linksdrehenden zirkularen Polarisation oder von einer linksdrehenden zirkularen Polarisation zu einer rechtsdrehenden zirkularen Polarisation zu wechseln.

6. Vorrichtung nach einem beliebigen der Ansprüche 1 bis 5, die mindestens ein Mittel zum Senden-/Empfangen von Funksignalen, das ein Abstrahlelement (8) für Funksignale und zwei Paare von Erregungspunkten (P₁, P₃; P₂, P₄) aufweist, wobei die Erregungspunkte eines Paares symmetrisch in Bezug auf einen Mittelpunkt (C) des Abstrahlelements (8) angeordnet sind, und zwei Sende-/Empfangsmodule (10a, 10b), die angepasst sind, jeweils eines der Paare von Erregungspunkten anzuregen, umfasst.

7. Verfahren zum Senden/Empfangen von Funksignalen, das von einer Vorrichtung (2) zum Senden/Empfangen von Funksignalen durchgeführt wird, die mindestens ein Modul (14) zum Steuern des Sendens/Empfangens und mindestens ein Element (8) zum Abstrahlen von Funksignalen umfasst, wobei das Steuermodul (14) der Vorrichtung zum Senden/Empfangen angepasst ist, das Senden/Empfangen von Impulsen von Funksignalen mit linearer und/oder zirkularer Polarisation gemäß einer Mehrzahl von Polarisationsrichtungen (θ) zu steuern, **dadurch gekennzeichnet, dass** es eine Steuerung zur fortschreitenden Änderung der Polarisationsrichtung der gesendeten/empfangenen Funksignale umfasst, wobei die Steuerung zur fortschreitenden Änderung der Polarisationsrichtung ausgehend von einer Ausgangsrichtung eine fortschreitende Änderung der Winkelrichtung gemäß einem vorbestimmten Richtungsänderungsmuster bis zur Rückkehr zu der Ausgangsrichtung über eine vorbestimmte Zeitdauer umfasst.

8. Verfahren nach Anspruch 7, bei dem die fortschreitende Änderung der Winkelrichtung gemäß einem vorgegebenen Änderungsmuster iterativ wiederholt wird.

9. Verfahren nach einem der Ansprüche 7 oder 8, bei dem das Steuermodul angepasst ist, ein Senden/Empfangen durch Impulse eines linear polarisierten Funksignals zu steuern, und bei dem das Steuern der fortschreitenden Änderung der Richtung darin besteht, eine Änderung der Polarisationsrichtung um ein Winkelinkrement eines vorbestimmten Wertes bei jedem Impuls oder durch Pakete von Impulsen zu steuern.

10. Verfahren nach einem der Ansprüche 7 oder 8, bei dem das Steuermodul angepasst ist, ein Senden/Empfangen durch Impulse eines zirkular polarisierten Funksignals zu steuern, und bei dem das Steuern der fortschreitenden Änderung der Richtung darin besteht, eine Änderung der Polarisationsrichtung um ein Winkelinkrement eines vorbestimmten Wertes bei jedem Impuls oder durch Pakete von Impulsen zu steuern, um fortschreitend von einer rechtsdrehenden zirkularen Polarisation zu einer linksdrehenden zirkularen Polarisation oder von einer linksdrehenden zirkularen Polarisation zu einer rechtsdrehenden zirkularen Polarisation zu wechseln.

## Claims

1. Transmission/reception device for radio-frequency signals, comprising at least one transmission/reception control module (14) and at least one radiating element (8) which radiates radio-frequency signals, the control module (14) of the transmission/reception device being adapted to control the pulsed transmission/reception of radio-frequency signals which are linearly and/or circularly polarised in accordance with a plurality of polarisation orientations (θ),
**characterised in that** the device is adapted to control a progressive modification of the polarisation orientation of the radio-frequency signals in transmission and in reception, the progressive modification of the polarisation orientation comprising, starting from an initial polarisation orientation, a progressive modification of the polarisation orientation in accordance with a predetermined orientation modification pattern until said initial polarisation orientation is returned to over a predetermined period of time.

2. Device according to claim 1, wherein the control module (14) is adapted to iteratively repeat said progressive modification of the polarisation orientation in accordance with said predetermined orientation modification pattern.

3. Device according to either claim 1 or claim 2, wherein the control module (14) is adapted to control a pulsed transmission/reception of a linearly polarised radio-frequency signal, and wherein the control of the progressive modification of the orientation consists in controlling a modification of the polarisation orientation by an angular increment of predetermined value at each pulse.

4. Device according to either claim 1 or claim 2, wherein the control module (14) is adapted to control a pulsed transmission/reception of a linearly polarised radio-frequency signal, and wherein the control of the progressive modification of the orientation consists in controlling a modification of the polarisation orientation by an angular increment of predetermined value by pulse packets.

5. Device according to either claim 1 or claim 2, wherein the control module (14) is adapted to control a pulsed transmission/reception of a circularly polarised radio-frequency signal, and wherein the control of the progressive modification of the orientation consists in controlling a modification of the polarisation orientation by an angular increment of predetermined value at each pulse or by pulse packets, in order to move progressively from a right-circular polarisation to a left-circular polarisation or from a left-circular polarisation to a right-circular polarisation.

6. Device according to any one of claims 1 to 5, comprising at least one transmission/reception means for radio-frequency signals comprising a radiating element (8) which radiates radio-frequency signals and two pairs of excitation points (P₁, P₃; P₂, P₄), the excitation points of a pair being arranged symmetrically with respect to a central point (C) of said radiating element (8), and two transmission/reception modules (10a, 10b) each adapted to excite one of said pairs of excitation points.

7. Method for the transmission/reception of radio-frequency signals implemented by a transmission/reception device (2) for radio-frequency signals comprising at least one transmission/reception control module (14) and at least one radiating element which radiates radio-frequency signals (8), the control module (14) of the transmission/reception device being adapted to control the pulsed transmission/reception of linearly and/or circularly polarised radio-frequency signals in accordance with a plurality of polarisation orientations (θ), **characterised in that** it comprises controlling the progressive modification of the polarisation orientation of the transmitted/received radio-frequency signals, the control of the progressive modification of the polarisation orientation comprising, starting from an initial angular orientation, a progressive modification of the angular orientation in accordance with a predetermined modification pattern until said initial angular orientation is returned to over a predetermined time period.

8. Method according to claim 7, wherein said progressive modification of the angular orientation in accordance with a predetermined pattern is repeated iteratively.

9. Method according to either claim 7 or claim 8, wherein said control module is adapted to control a pulsed transmission/reception of a linearly polarised radio-frequency signal, and wherein the control of the progressive modification of the orientation consists in controlling a modification of the polarisation orientation by an angular increment of predetermined value at each pulse or by pulse packets.

10. Method according to either claim 7 or claim 8, wherein said control module is adapted to control a pulsed transmission/reception of a circularly polarised radio-frequency signal, and wherein the control of the progressive modification of the orientation consists in controlling a modification of the polarisation orientation by an angular increment of predetermined value at each pulse or by pulse packets, in order to move progressively from a right-circular polarisation to a left-circular polarisation or from a left-circular polarisation to a right-circular polarisation.
